## Europäisches Patentamt
## European Patent Office
## Office européen des brevets

(11) Veröffentlichungsnummer: **0 003 339**
**A1**

(12) **EUROPÄISCHE PATENTANMELDUNG**

(21) Anmeldenummer: **79100169.6**

(22) Anmeldetag: **19.01.79**

(51) Int. Cl.²: **G 11 B 21/08**
**H 04 N 5/78**
**//G11B5/55**

(30) Priorität: **23.01.78 US 871238**

(43) Veröffentlichungstag der Anmeldung:
**08.08.79 Patentblatt 79/16**

(84) Benannte Vertragsstaaten:
**BE CH DE FR GB IT NL SE**

(71) Anmelder: **BASF Aktiengesellschaft**
**Carl-Bosch-Strasse 38**
**D-6700 Ludwigshafen(DE)**

(72) Erfinder: **Bjordahl, James**
**270W. Camnoreal**
**Arcadia, Calif.(US)**

(54) Vorrichtung zum genauen Positionieren eines Wandlerkopfes in Aufzeichnungssystemen.

(57) Eine Vorrichtung zum genauen Positionieren eines Wandlerkopfes relativ zu einer Vielzahl von Aufzeichnungsspuren, insbesondere auf einem Magnetband, bestehend aus einem Rahmenteil mit einer darauf bewegbaren Steuerstufeneinrichtung und einem mit einer Bewegungsübertragungseinrichtung verbundenen Träger für den Wandlerkopf.

Der Betrag der Bewegung des Wandlerkopfes ist kleiner als der Betrag der Bewegung der Bewegungsübertragungseinrichtung, so dass der Wandlerkopf in kleineren Schritten als den Schritten der Schrittstufen entsprechend verstellt wird.

Die Bewegungsübertragungseinrichtung besteht aus einem Schwenkhebel (55), der einerseits mit dem Auflageende auf der Steuerstufeneinrichtung ruht und der andererseits eine Plattform mit dem Wandlerkopf (13) trägt. Eine Drehung der Steuerstufeneinrichtung bewegt den Schwenkhebel.

Der Wandlerkopf wird auch durch weitere Feineinstelleinrichtungen sehr genau auf jede einzelne Spur des Aufzeichnungsträgers positioniert. Eine Azimuteinstellung des Wandlerkopfes ist automatisch sichergestellt.

Fig. 2

EP 0 003 339 A1

BASF Aktiengesellschaft        0003339        O.Z.0050/033071

Vorrichtung zum genauen Positionieren eines Wandlerkopfes
in Aufzeichnungssystemen

Die Erfindung betrifft eine Vorrichtung zum genauen Positionieren eines Wandlerkopfes relativ zu einer Vielzahl von Aufzeichnungsspuren auf einem Aufzeichnungsträger, im wesentlichen bestehend aus einem Rahmenteil mit einer darauf bewegbaren Steuerstufeneinrichtung mit den Aufzeichnungsspuren zugeordneten Schrittstufen, einer Bewegungsübertragungseinrichtung, die jeweils mit mindestens einer Schrittstufe der Steuerstufeneinrichtung in Eingriff steht und die bei Bewegung der Steuerstufeneinrichtung ebenfalls bewegt wird, einem mit der Bewegungsübertragungseinrichtung verbundenen Träger für den Wandlerkopf, so daß bei Bewegung der Bewegungsübertragungseinrichtung auch der Wandlerkopf bewegt wird.

Eine Wandlerpositioniervorrichtung ist beispielsweise in der deutschen Offenlegungsschrift DOS 24 31 545 beschrieben. Die bekannte Vorrichtung enthält einen Rahmen mit einer Führung für ein am Wandlerkopf vorbeigeleitetes Magnetband, sowie eine Steuerkurve, die drehbar am Rahmen befestigt ist und auf ihrer Oberseite eine Reihe ebener Stufen aufweist. Eine plattformartige Einheit trägt den Wandlerkopf und ist mit einem stabartigen Träger versehen, der ständig in Kontakt

De/DK

0003339

mit den Stufen der Steuerkurve ist, so daß die gesteuerte Drehung der Kurve bewirkt, daß der Kopf aufwärts oder abwärts in vorgegebene Stellungen bewegt werden kann, die den Positionen der Aufzeichnungsspuren auf dem Magnetband entsprechen.

Die bekannte Vorrichtung hat den Nachteil, daß die Genauigkeit, mit der der Wandlerkopf bezüglich der Spuren auf dem Magnetband positioniert werden kann, die Genauigkeit, mit der die Stufen der Steuerkurve herstellbar sind, nicht übertreffen kann. In einem Aufzeichnungssystem mit einer verhältnismäßig hohen Spurdichte, zum Beispiel einem Spurabstand von 150 /um oder weniger, muß die Steuerkurve mit äußerster Genauigkeit ausgebildet sein, wodurch die Herstellungskosten unverhältnismäßig hoch werden.

Ein weiterer Nachteil der bekannten Vorrichtung ergibt sich aus der Notwendigkeit, einen komplizierten, kostspieligen Mechanismus für die manuelle Vertikalnachstellung des Wandlerkopfes in bezug auf die Mitte der Magnetbandspuren vorzusehen. Der Nachstellmechanismus umfaßt Einrichtungen zum Anheben der ganzen Steuerkurve relativ zum Rahmen, um so mittelbar eine Relativbewegung des Kopfes zu bewirken.

Es ist Aufgabe der Erfindung, eine Vorrichtung bereitzustellen, mittels welcher ein Wandlerkopf in bezug auf die Spuren eines Aufzeichnungsträgers positionierbar ist, ohne mit Kompliziertheit bzw. hohen Kosten verbunden zu sein.

Eine Vorrichtung zum genauen Positionieren eines Wandlerkopfes relativ zu einer Vielzahl von Aufzeichnungsspuren auf einem Aufzeichnungsträger, im wesentlichen bestehend aus einem Rahmenteil mit einer darauf bewegbaren Steuerstufeneinrichtung mit den Aufzeichnungsspuren zugeordneten

0003339

Schrittstufen, einer Bewegungsübertragungseinrichtung, die jeweils mit mindestens einer Schrittstufe der Steuerstufeneinrichtung in Eingriff steht und die bei Bewegung der Steuerstufeneinrichtung ebenfalls bewegt wird, einem mit der Bewegungsübertragungseinrichtung verbundenen Träger für den Wandlerkopf, so daß bei Bewegung der Bewegungsübertragungseinrichtung auch der Wandlerkopf bewegt wird, ist gemäß vorliegender Erfindung dadurch gegeben, daß der Betrag der Bewegung des Wandlerkopfes kleiner als der Betrag der Bewegung der Bewegungsübertragungseinrichtung ist, so daß der Wandlerkopf in kleineren Schritten als den Schritten der Schrittstufen entsprechend verstellt wird.

Besonders günstig ist eine Wandlerpositioniervorrichtung gemäß der Erfindung in einem Videobandgerät mit longitudinaler Aufzeichnung, d.h. bei dem die Aufzeichnungsspuren auf dem Videoband parallel zueinander längs auf dem Magnetband angeordnet sind. Die Vorrichtung umfaßt einen Rahmen, der zweckmäßig mit dem Chassis des Aufzeichnungsgerätes einstückig ausgebildet sein kann und der Bandführungseinrichtungen zur Führung des Aufzeichnungsträgers definiert am Wandlerkopf vorbei aufweist. Angaben über die Ausrichtung der Vorrichtungsteile relativ zueinander dienen der beispielhaften Beschreibung und die Erfindung ist selbstverständlich nicht auf diese besonderen Gegebenheiten beschränkt anzusehen.

In weiterer Ausbildung der erfindungsgemäßen Vorrichtung kann der Träger zumindest eine Lagervorrichtung umfassen, die einerseits am Rahmenteil festgelegt ist und andererseits ein freies Ende besitzt, das mit Abstand zum Rahmenteil angeordnet ist und den Wandlerkopf trägt.

Weiterhin kann der Träger eine Einstelleinrichtung zur Änderung des Abstands zwischen dem freien Ende und dem Rahmenteil aufweisen, womit die Wandklerkopfposition einstellbar ist.

0003339

In vorteilhaft einfacher Ausführung kann die Bewegungsübertragungseinrichtung einen Schwenkhebel aufweisen, der schwenkbar relativ zum Rahmenteil gelagert ist.

In weiterer Ausbildung kann der Schwenkhebel ein mit dem Lagerteil verbundenes Lagerende und ein freies Auflageende für die Schrittstufen der Steuerstufeneinrichtung aufweisen. Dadurch wird durch Drehung der Steuerstufeneinrichtung die Schrittstufe, auf der das Auflageende des Schwenkhebels gerade liegt, geändert, wodurch die Position des Schwenkhebels in der Höhe variiert wird.

In zweckmäßiger Ausgestaltung kann der Träger eine Plattformeinheit für den Wandlerkopf umfassen und Halteeinrichtungen, die das Aufliegen der Plattformeinheit auf dem Schwenkhebel bewirken, sowie Ausrichteinrichtungen zum festen Ausrichten der Plattformeinheit im Winkel relativ zum Rahmenteil, können vorgesehen sein, wobei eine Schwenkbewegung des Schwenkhebels eine entsprechende Verstellbewegung der Plattformeinheit bewirkt.

Dadurch wird herstellungsmäßig und einstellungsmäßig eine sehr einfache Lösung bereitgestellt.

In herstellungsmäßig besonders vorteilhafter Ausführung können die Halte- und Ausrichteinrichtungen an Plattform- und Rahmenteil vorgesehen sein und einen in einem Rohrteil gelagerten Ausrichtstab enthalten.

Es ist ebenfalls möglich, daß der Rahmenteil erfindungsgemäß Führungseinrichtungen für den Aufzeichnungsträger aufweist und eine Stufenscheibe mit flachen Schrittstufen jeder der Aufzeichnungsspuren zugeordnet vorgesehen ist und ein Schwenkhebel am Rahmenteil mittels einer Lagervorrichtung gelagert ist, sowie Halteeinrichtungen vorgesehen sind,

0003339

die das freie Auflagehebelende auf einer der Schrittstufen der Stufenscheibe halten und eine Plattformeinheit als Träger für den Wandlerkopf im Bereich des Mittelteils des Schwenkhebels angeordnet ist.

In weiterer Ausbildung kann als Halte- und Ausrichteinrichtung zwischen Plattform und Rahmenteil eine Feder vorgesehen sein, mittels der die Plattformeinheit teilweise zur Anlage an den Rahmenteil heranbewegt wird, wodurch eine Winkelbewegung um die Achse des Ausrichtrohrteils verhinderbar ist.

Dadurch ist eine exakte Azimuteinstellung des Wandlerkopfes zu den Aufzeichnungsspuren möglich. Praktisch kann zwischen der Plattformeinheit und dem Schwenkhebel ein Kugellager vorgesehen sein.

In praktischer Ausbildung kann die Plattformeinheit einen Bodenteil sowie Seitenteile aufweisen, zwischen denen der Wandlerkopf einspannbar ist.

In zweckmäßiger Ausbildung kann die Lagervorrichtung für den Schwenkhebel ein Kugellager am freien Auflageende umfassen und die Einstelleinrichtung zur Abstandsänderung zwischen Schwenkhebel und Rahmen kann durch wenigstens eine Schraube gebildet werden, die das freie Ende des Lagerteils mit dem Rahmenteil verbinden.

In weiterer Ausführung kann die Plattform aus den folgenden Teilen bestehen:
dem Bodenteil, den Seitenteilen und den Ausrichtungseinrichtungen, die aus dem Ausrichtstab und einem Rohrteil zur Führung desselben gebildet sind, sowie Federelemente zwischen Plattform und Rahmenteil aufweist.

0003339

In praktischer Ausbildung besteht die Lagervorrichtung aus einem Paar Lagerblöcken mit jeweils einem befestigten und einem freien Ende und aus Federelementen, die den Schwenkhebel mit den freien Enden der Lagerblöcke verbinden, und es sind Einstelleinrichtungen für die freien Enden beider Lagerblöcke relativ zum Rahmenteil vorgesehen.

Dadurch ist eine Feineinstellung der Hebelposition relativ zum Rahmenteil möglich.

Zahlreiche andere Merkmale und Vorteile der Erfindung sind der nachfolgenden Beschreibung eines Ausführungsbeispiels einer Vorrichtung zu entnehmen, die in den Zeichnungen dargestellt ist.

Figur 1 ist eine Explosions-Darstellung einer Wandlerpositioniervorrichtung gemäß der Erfindung;

Figur 2 ist eine perspektivische Teilansicht der Vorrichtung in Figur 1 und zeigt die verschiedenen Teile der Vorrichtung im zusammengebauten Zustand;

Figur 3 ist eine Draufsicht der Vorrichtung in Figur 2, bei der der Wandlerkopf im Betrieb am Aufzeichnungsträger anliegt.

Figur 4 ist eine Ansicht der Vorrichtung im Schnitt gemäß der Linie 4-4 der Figur 3; und

Figur 5 ist eine vergrößerte Teilansicht im Schnitt gemäß der Linie 5-5 in Figur 3.

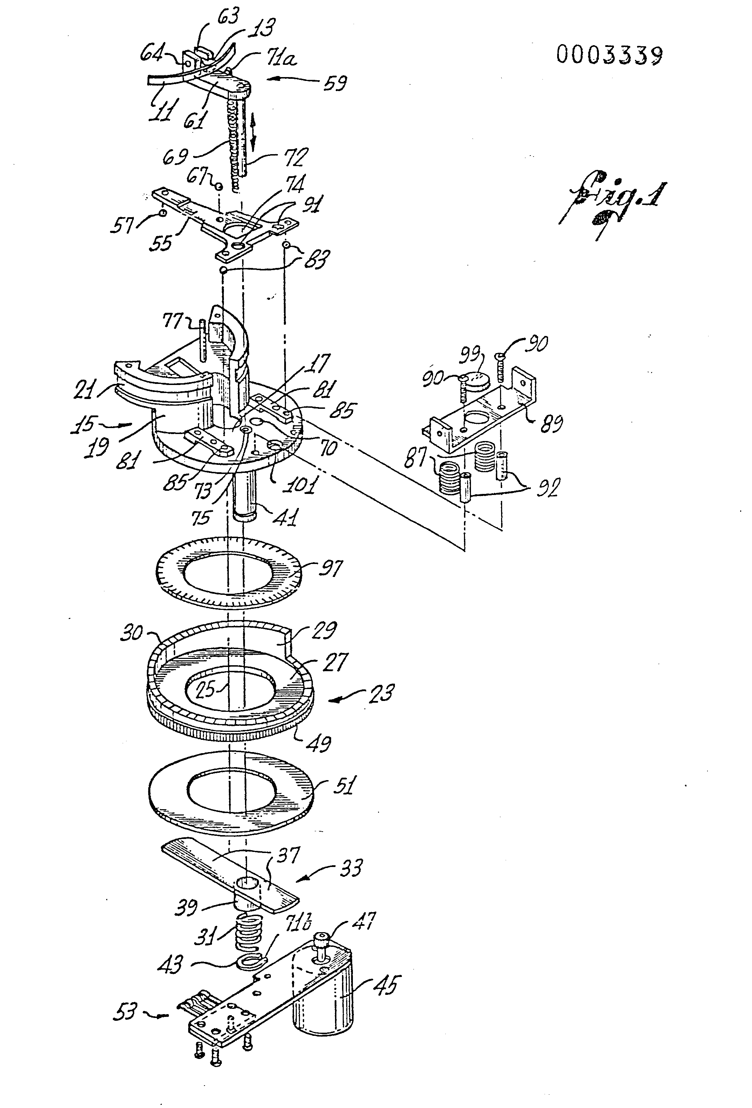

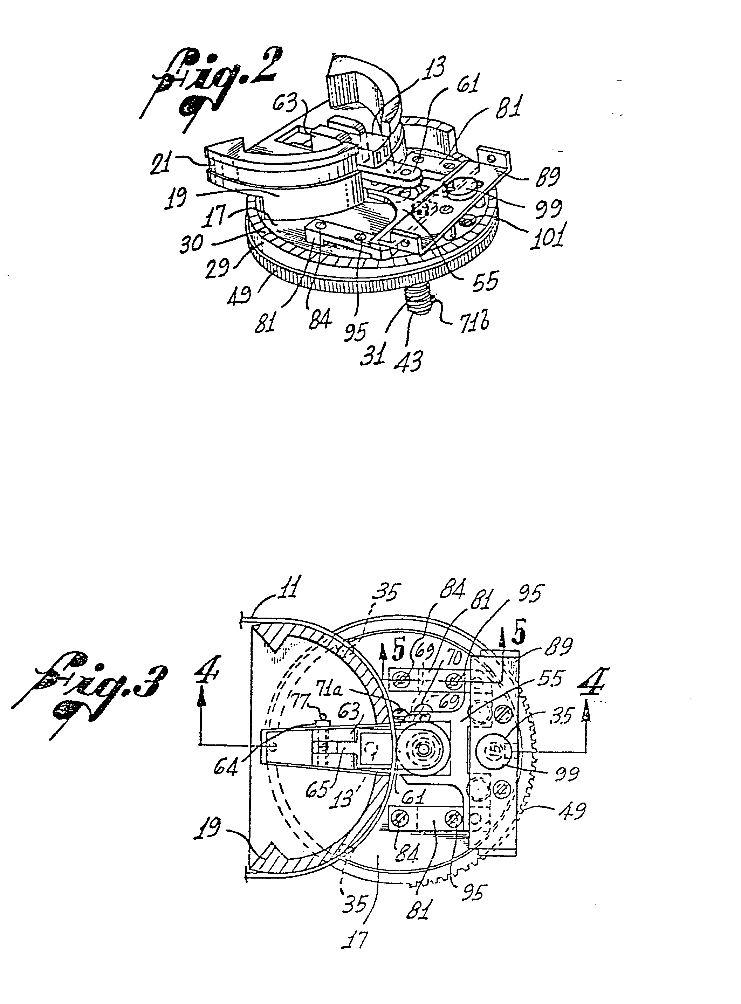

In den Zeichnungen, und insbesondere in den Figuren 1 und 2, ist eine Positioniervorrichtung gezeigt, die gemäß einer zweckmäßigen Ausführungsform der Erfindung konstruiert ist.

0003339

Diese Vorrichtung wird z.B. bei einem Videomagnetbandgerät für Längsaufzeichnung eingesetzt, bei welchem das Magnetband 11 mit einer Vielzahl parallellaufender Aufzeichnungsspuren an einem magnetischen Wandlerkopf 13 vorbeigeführt wird.

Die Vorrichtung umfaßt einen Rahmenteil 15, der fest mit dem Chassis des Aufzeichnungsgerätes verbunden sein kann. Der Rahmenteil 15 umfaßt einen waagerechten Teil 17 und einen senkrechten Teil 19, letzterer mit einer Führung 21 in Form eines Troges mit Nut, in der das Magnetband 11 auf einem waagerechten Weg entlang des Wandlerkopfes 13 geführt wird. Eine Führungsvorrichtung, mittels der ein solches Magnetband problemlos am Wandlerkopf vorbeiführbar ist, ist mit dem US-Patent Nr. 3 979 037 bekannt.

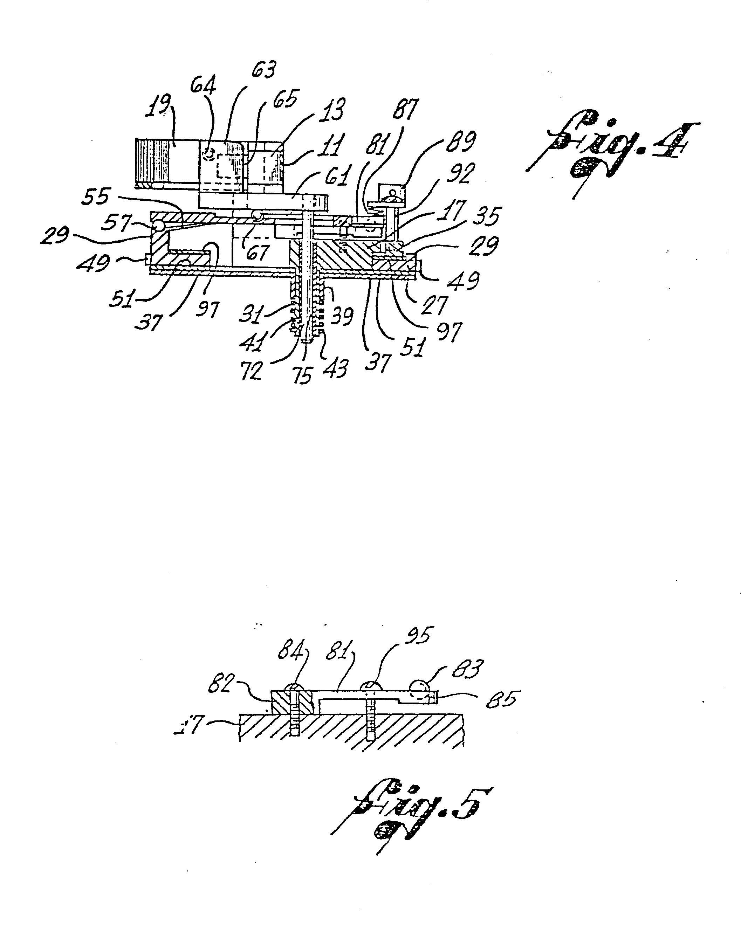

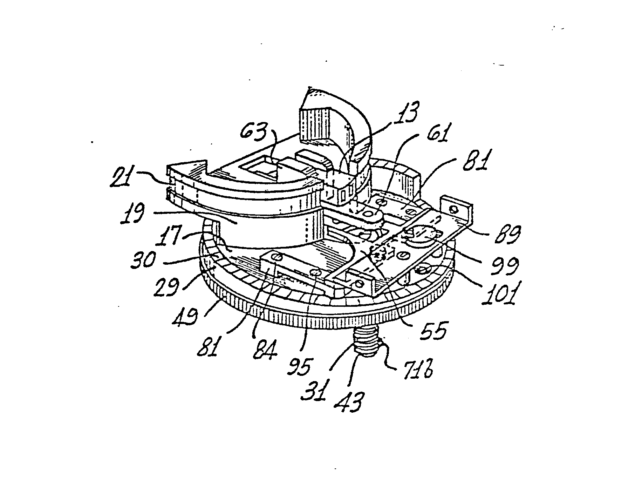

Die Vorrichtung umfaßt ferner als Steuerstufeneinrichtung eine Steuerstufenscheibe 23, die auf dem Rahmenteil 15 derart montiert ist, daß sie um eine senkrechte Achse 25 rotieren kann. Diese Steuerstufenscheibe umfaßt einen waagerechten Ringteil 27 und einen diesen Teil umgebenden, zylinderförmigen, senkrechten Teil 29 mit einer Oberseite 30, auf der eine Reihe treppenartiger, ebener Schrittstufen vorgesehen ist. Jede dieser Stufen entspricht der Lage einer der Längsspuren auf dem Magnetband 11. Teil 29 ist auf dem Umfangsrand des waagerechten Teils 17 des Rahmenteils 15 angeordnet und befestigt. Das Ringteil 27 der Stufenscheibe 23 wird durch Druck einer Feder 31 und mittels T-Bügels 33 gegen eine Reihe reibungsarmer Auflagen 35 gedrückt, siehe Figuren 3 und 4, die an der Unterseite des waagerechten Teils 17 des Rahmenteils 15 ausgebildet sind. Der T-förmige Bügel 33 ist mit einer Buchse 39 für ein Ausrichtrohrteil 41 versehen, wobei letzterer sich vom Rahmenteil 15 nach unten erstreckt. Der Bügel 33 weist außerdem zwei Arme 37 auf, die sich seitlich vom oberen Ende der Buchse erstrecken und das

0003339

"T" bilden und an entgegengesetzten Hälften der Stufenscheibe anliegen. Der Rohrteil 41 erstreckt sich auch durch die
Feder 31, die mittels eines Spreizrings 43 in einer Nut am
unteren Ende des Rohrteils gehalten wird. Die Feder drückt
die Arme 37 gegen die Stufenscheibe 23. Der Rohrteil 41 befindet sich vorzugsweise in der Nähe der Drehachse 25 der
Stufenscheibe 23, so daß die Arme 37 etwa gleichlang sind
und kein wesentliches Drehmoment um eine zur Achse des Rohrteils 41 senkrechte Achse auf den T-Bügel einwirken kann.

Die Stufenscheibe 23 wird relativ zum Rahmenteil 15 über
einen Motor 45 in Drehung versetzt, wobei ein Ritzel 47 auf
der Motorwelle in eine Verzahnung 49 an der Peripherie der
Stufenscheibe 23 eingreift. Der Motor 45 wird über Steuereinrichtungen, die auf vom Aufzeichnungsgerät erhaltene
Steuersignale ansprechen, selektiv erregt, um die Steuerkurve in einer von beiden Richtungen um einen vorgegebenen Betrag zu drehen. Diese Steuereinrichtungen umfassen z.B. eine
Kommutatorscheibe 51 (Fig. 4), beispielsweise in Form einer
gedruckten Schaltung, wobei diese Scheibe an der Unterseite
der Steuerstufenscheibe 23 befestigt ist, und eine Reihe von
Kontaktbürsten 53, über die der Kontakt zur Kommutatorscheibe 51 herstellbar ist, um die Winkellage der Stufenscheibe 23
zu überwachen.

Die Vorrichtung umfaßt außerdem einen Schwenkhebel 55 mit
einem Lagerende, das schwenkbar am waagerechten Teil 17 des
Rahmenteils 15 montiert ist, und einem äußeren Ende, dem
Auflageende, das unter Druck auf der stufenförmigen Oberseite 30 der Stufenscheibe 23 aufliegt. Ein Kugellager 57 ist
auf der Unterseite des freien äußeren Endes des Hebels 55
angebracht, um den Reibungswiderstand, der einer Relativbewegung zwischen Hebel 55 und der Stufenscheibe 23 entgegenwirkt, zu reduzieren. Eine gesteuerte Drehung der Stufenscheibe 23 um eine weitere Anzahl von Stufen bewirkt das

0003339

Anheben oder Absenken des Auflageendes des Schwenkhebels 55 um eine entsprechende Anzahl von Stufen.

Der Wandlerkopf 13 ist zweckmäßig mit einem mittleren Teil des Schwenkhebels 55 verbunden, wodurch ein Anheben oder Absenken des Auflageendes bei Drehung der Steuerkurve 23 ein entsprechendes Anheben oder Absenken jedoch um einen geringeren Betrag des Wandlerkopfes 13 bewirkt. Die Drehung der Stufenscheibe 23 um eine vorgegebene Anzahl von Stufen positioniert den Wandlerkopf 13 in Vertikalrichtung, d.h. quer zu einer gleichen Anzahl von Spuren auf dem Band 11. Damit ist klar, daß der Schwenkhebel 55 eine Wegübersetzung ermöglicht, wodurch eine Bewegung des Wandlerkopfes 13 von einer Bandspur zur anderen durch verhältnismäßig große Steuerstufenschritte erreicht wird. Dies schafft einen größeren Spielraum für Herstellungstoleranzen und reduziert daher die Herstellungskosten. Prinzipiell lassen sich auch andere Wegübertragungseinrichtungen wie Zahnrad, Zahnstange usw. verwenden.

Praktisch ist der Wandlerkopf 13 mit dem Hebel 55 durch eine Kopfplattformeinheit 59 verbunden, wobei letzterer eine ebene Plattform 61, das Bodenteil und aufrechte Seitenteile 63 umfaßt. Wie am besten aus den Figuren 3 und 4 zu ersehen ist, befinden sich die Seitenteile 63 an den Seiten der Plattform 61 und dienen z.B. der Klemmhalterung des Wandlerkopfes 13. Durch Festziehen einer Schraube 64 können die Seitenteile 63 zum Einklemmen des Kopfes gegeneinander bewegt werden. Ein fingerartiger Teil 65 erstreckt sich vom Wandlerkopf 13 nach hinten und ist zwischen den Seitenteilen 63 einklemmbar, um den Wandlerkopf an der Plattformeinheit 59 zu befestigen. Die Einheit 59 ist oberhalb des Schwenkhebels 55 auf einer Plattformstütze angeordnet, welche die Form eines Kugellagers 67 besitzt und welches auf der Oberseite des Mittelteils des Schwenkhebels 55 vorgesehen

0003339

ist und auf der Unterseite der ebenen Plattform 61 anliegt.

Eine Kopffeder 69 drückt die Plattform 61 nachgiebig gegen
das Kugellager 67 und bewirkt außerdem, daß das äußere Ende
des Schwenkhebels 55 an der Oberseite 30 der Stufenscheibe 23 aufliegt. Die Feder erstreckt sich durch eine Öffnung 70 im Rahmenteil 15 hindurch und verbindet einen ersten
Vorsprung 71a, der seitlich von der Plattform 61 vorsteht,
mit einem zweiten Vorsprung 71b, der seitlich am Spreizring 43 am Rohrteil 41 vorgesehen ist.

Weiter umfaßt die Vorrichtung Einrichtungen zur automatischen
Einhaltung der genauen Ausrichtung des Azimuts des Wandlerkopfes 13 relativ zu den Spuren auf dem Band 11. Die Azimutausrichtung des Kopfes läßt sich auf eine maximale Abweichung
von 3 Bogenminuten beschränken. Die Einrichtungen zur Ausrichtung umfassen einen Ausrichtestab 72, der sich von der
Kopfplattformeinheit 59 nach unten erstreckt, und eine entsprechende Längsbohrung 73, im Rohrteil 41 am Rahmenteil 15.
Wie am besten aus den Figuren 1 und 4 hervorgeht, erstreckt
sich der Stab 72 nach unten von einem Ende der Plattform 61
und senkrecht zu letzterer, um die Öffnung 74 im Schwenkhebel 55 zu passieren und in die Bohrung 73 einzugreifen.
In die Bohrung 73 wird vorzugsweise eine reibungsarme
Buchse 75 eingesetzt, um ein Spiel von höchstens 25 /um zu
erlauben und den Widerstand gegen Auf- und Abwärtsgleitbewegungen des Stabes 72 in der Öffnung 73 auf ein Mindestmaß
zu beschränken.

Es versteht sich, daß die Winkelstellung des Schwenkhebels 55 in Bezug auf den Rahmenteil 15 variiert, wenn der
Schwenkhebel 55 von der Stufenscheibe 23 aufwärts- oder abwärtsgeschwenkt wird. Diese Verstellung beeinflußt jedoch
nicht die Winkelstellung der Kopfplattformeinheit 59, welche

0003339

die Auf- und Abwärtsbewegung mitmacht, da ja die Bewegung des zur Einheit gehörigen Ausrichtestabes 72 durch die Einheit auf eine Auf- und Abwärtsbewegung in der senkrecht verlaufenden Öffnung 73 beschränkt wird. Die Schwenkbewegung des Hebels 55 bewirkt daher ein Anheben und Absenken der Plattformeinheit 59, während der Ausrichtestab 72 mit Bohrung 73 sicherstellt, daß die Plattform 61 horizontal ausgerichtet bleibt.

Eine Schwenkbewegung in einer horizontalen Ebene um die Achse des Ausrichtestabes 72 der Kopfplattformeinheit 59 wird durch eine Feder 69 verhindert, die mit einem Stift 77 zusammenarbeitet, der nach oben aus dem Rahmen 15 herausragt. Die Feder 69, welche die Plattformeinheit 59 mit dem Spreizring 43 am Rohrteil 41 verbindet, drückt den Kopf der Schraube 64, die im Seitenteil 63 der Einheit vorgesehen ist, nachgiebig gegen den Stift 77. Die Feder 69 bildet einen kleinen Winkel mit der Achse des Ausrichtestabes 72, und eine geringfügige Rotationskraft um diese Achse wird auf die Einheit ausgeübt. Der Stift 77 beaufschlagt daher die Einheit mit einer kleinen Gegenrotationskraft und erzeugt daher nur einen äußerst geringfügigen Reibungswiderstand gegen vertikale Bewegungen der Einheit.

Weiter sind an der Lagervorrichtung des Schwenkhebels 55 am Rahmenteil 15 Feineinstellmittel vorgesehen, durch die die ursprüngliche Einstellung der Vertikallage des Wandlerkopfes 13 vornehmbar ist und wodurch dieser auf die Mittellinie einer Spur auf dem Band 11 ausrichtbar ist. Wie aus den Figuren 2 und 5 hervorgeht, kann die Lagervorrichtung aus zwei flexiblen Lagerblöcken 81 bestehen, die am Rahmenteil 15 angebracht sind, und ferner zwei Kugellager 83 aufweisen, die auf der Unterseite des schwenkbaren Auflageendes des Schwenkhebels 55 vorgesehen sind. Beide Lagerblöcke 81 besitzen einerseits ein festes Ende mit einer nach unten

0003339

vorspringenden Basis 82, die am waagerechten Teil 17 des Rahmenteils 15 mittels einer Schraube 84 befestigt ist, sowie andererseits ein freies Ende, das freitragend mit Abstand über dem Rahmenteil 15 hervorragt.

Die freien Enden der Blöcke 81 sind auf ihrer Oberseite jeweils mit einem konkaven Sitz 85 für die Kugeln 83 versehen, die ihrerseits von zwei Spiralfedern 87, die zwischen der Oberseite des Auflageendes des Schwenkhebels 55 und der Unterseite eines gegenüber dem Rahmenteil 15 mit Abstand befestigten Bügels 89 in die Lagersitze hineingedrückt werden. Zweckmäßig besteht der Bügel aus einer flachen Platte, die über dem Auflageende des Schwenkhebels 55 liegt und am Rahmenteil 15 mittels Schrauben 90 befestigt ist, deren Lage über Bohrungen in der Platte und zwei dazwischenliegende Abstandsstücke 92 zwischen Platte und Rahmenteil 15 bestimmt ist. An der Oberseite des Schwenkhebels 55 vorgesehene Vertiefungen 91 nehmen die unteren Enden der Federn 87 auf und vermeiden, daß die Federn seitlich aus ihrer korrekten Lage herausrutschen können.

Die vertikale Relativlage des freien Endes jedes der Lagerblöcke 81, und somit die Relativlage des Auflageendes des Hebels 55, läßt sich von Hand über eine Stellschraube 95 nachstellen (Fig. 5), über die das freie Ende des Blocks 81 am Rahmenteil 15 befestigt ist. Durch Drehen der Stellschraube bewirkt man die gezielte Biegung des Lagerblocks, wodurch der Abstand zwischen dem Rahmenteil 15 und dem freien Ende des Blocks 81 gezielt einstellbar ist, so daß das schwenkbare Auflageende des Schwenkhebels 55 ebenfalls gezielt anhebbar oder absenkbar wird und ebenfalls der Wandlerkopf 13 um einen entsprechenden, jedoch geringeren Betrag anhebbar oder absenkbar wird. Dabei ist zu beachten, daß die vom Schwenkhebel 55 bewirkte mechanische Übersetzung die

0003339

Positionierung des Wandlerkopfes 13 mit einer Präzision erlaubt, welche diejenige, mit der das schwenkbare Auflageende des Schwenkhebels 55 positioniert wird, übertrifft. Jeder der Biegungs-Lagerblöcke setzt dem Kopf der entsprechenden Stellschraube 95 einen Vertikalwiderstand entgegen, der ausreicht, ein Lösen der Schraube durch Schlag oder Erschütterung, wodurch eine Fehlausrichtung des Wandlerkopfes 13 bewirkt würde, zu verhindern.

Die Positioniervorrichtung kann außerdem Einrichtungen enthalten zur Bereitstellung einer Sichtanzeige der gerade eingestellten Kurvenstufe und damit der Bandspur, auf die der Wandlerkopf 13 gerade ausgerichtet ist. Diese Einrichtungen umfassen eine Spuranzeigescheibe 97 (Fig. 1), die an der Oberseite des ringförmigen Teils 27 der Stufenscheibe 23 angebracht ist, und kann eine am Bügel 89 befestigte Linse 99 aufweisen.

Die Scheibe 97 weist eine Zahl für jede Steuerscheibenstufe auf, wobei die Zahl für die Kurvenstufe, auf welcher der Schwenkhebel 55 gerade aufliegt, durch eine im Rahmenteil 15 vorhandene Öffnung 101 sichtbar wird. Die Linse 99 vergrößert das Zahlenbild, so daß es leichter für den Bedienenden des Videoaufzeichnungsgerätes ablesbar wird.

Aus der hier gelieferten Beschreibung wird klar, daß die vorliegende Erfindung eine wirksame Vorrichtung zur genauen Positionierung eines Wandlerkopfes mit Bezug auf die Spuren eines Informationsträgers angibt. Der Kopf ruht auf einem Schwenkhebel derart, daß eine Bewegung des Hebels, verursacht durch die Bewegung einer Steuerstufenscheibe, die Positionierung des Kopfes in Bezug auf die Spuren mit einer Genauigkeit bewirkt, welche die Genauigkeit, mit der die Stufenscheibe ausgebildet ist, übertrifft. Im übrigen umfaßt die Vorrichtung genaue Mittel zur Azimutausrichtung, um die

0003339

Notwendigkeit eines besonderen Nachstellvorgangs für die Azimutwinkellage des Kopfes zu vermeiden, und schließlich Spureinstellmittel, um eine einfache und dennoch wirksame ursprüngliche Ausrichtung des Wandlerkopfes relativ zur Mittellinie einer Spur zu erleichtern, indem die Relativlage der Schwenkachse des Hebels kontrolliert wird.

Obwohl hier eine besondere Ausführungsform der Erfindung illustriert und beschrieben ist, wird dem Fachmann klar, daß verschiedene Abänderungen getroffen werden können, ohne vom Erfindungsgedanken oder Erfindungsumfang der beigefügten Patentansprüche abzuweichen.

0003339

<u>Patentansprüche</u>

1. Vorrichtung zum genauen Positionieren eines Wandlerkopfes relativ zu einer Vielzahl von Aufzeichnungsspuren auf einem Aufzeichnungsträger, im wesentlichen bestehend aus einem Rahmenteil mit einer darauf bewegbaren Steuerstufeneinrichtung mit den Aufzeichnungsspuren zugeordneten Schrittstufen, einer Bewegungsübertragungseinrichtung, die jeweils mit mindestens einer Schrittstufe der Steuerstufeneinrichtung in Eingriff steht und die bei Bewegung der Steuerstufeneinrichtung ebenfalls bewegt wird, einem mit der Bewegungsübertragungseinrichtung verbundenen Träger für den Wandlerkopf, so daß bei Bewegung der Bewegungsübertragungseinrichtung auch der Wandlerkopf bewegt wird, <u>dadurch gekennzeichnet</u>, daß der Betrag der Bewegung des Wandlerkopfes (13) kleiner als der Betrag der Bewegung der Bewegungsübertragungseinrichtung (55) ist, so daß der Wandlerkopf (13) in kleineren Schritten als den Schritten der Schrittstufen (30) entsprechend verstellt wird.

2. Vorrichtung nach Anspruch 1, <u>dadurch gekennzeichnet</u>, daß der Träger zumindest eine Lagervorrichtung (81) umfaßt, der einerseits am Rahmenteil (15) festgelegt ist und andererseits ein freies Ende besitzt, das mit Abstand zum Rahmenteil (15) angeordnet ist und den Wandlerkopf (13) trägt.

3. Vorrichtung nach Anspruch 2, <u>dadurch gekennzeichnet</u>, daß der Träger eine Einstelleinrichtung (95) zur Änderung des Abstands zwischen dem freien Ende (81) und dem Rahmenteil (15) aufweist, womit die Wandlerkopfposition einstellbar ist.

0003339

4. Vorrichtung nach Ansprüchen 1 bis 3, <u>dadurch gekenn-</u> <u>zeichnet</u>, daß die Bewegungsübertragungseinrichtung einen Schwenkhebel (55) aufweist, der schwenkbar relativ zum Rahmenteil (15) gelagert ist.

5. Vorrichtung nach Anspruch 4, <u>dadurch gekennzeichnet</u>, daß der Schwenkhebel (55) ein Lagerende und ein Auflageende für die Schrittstufen (30) der Steuerstufeneinrichtung (23) aufweist.

6. Vorrichtung nach Ansprüchen 1 bis 4, <u>dadurch gekenn-</u> <u>zeichnet</u>, daß der Träger eine Plattformeinheit (59) für den Wandlerkopf (13) umfaßt und erste Einrichtungen zum Aufliegen der Plattform auf dem Schwenkhebel (55) sowie Ausrichteinrichtungen zum festen Ausrichten der Plattformeinheit (59) im Winkel relativ zum Rahmenteil (15), wobei eine Schwenkbewegung des Schwenkhebels (55) eine entsprechende Verstellbewegung der Plattformeinheit (59) bewirkt.

7. Vorrichtung nach Anspruch 6, <u>dadurch gekennzeichnet</u>, daß die Ausrichteinrichtungen an Plattformeinheit und Rahmenteil (59 bzw. 15) vorgesehen sind und einen in einem Rohrteil (41) gelagerten Ausrichtstab (72) enthalten.

8. Vorrichtung nach einem oder mehreren der Ansprüche 1 bis 7, <u>dadurch gekennzeichnet</u>, daß der Rahmenteil (15) Führungseinrichtungen (21) für den Aufzeichnungsträger aufweist und eine Stufenscheibe (23) mit flachen Schrittstufen (30) jeder der Aufzeichnungsspuren zugeordnet vorgesehen ist, und ein Schwenkhebel am Rahmenteil (15) mittels einer Lagervorrichtung (81) gelagert ist, sowie Halteeinrichtungen (69) vorgesehen sind, die das Auflageende des Schwenkhebels (55) auf einer der

0003339

Schrittstufen (30) der Stufenscheibe (23) halten, und daß eine Plattformeinheit (59) als Träger für den Wandlerkopf (13) im Bereich des Mittelteils des Schwenkhebels (55) angeordnet ist.

9. Vorrichtung nach Ansprüchen 6 bis 9, dadurch gekennzeichnet, daß als Halteeinrichtung zwischen Plattformeinheit (59) und Rahmenteil (15) eine Feder (69) vorgesehen ist, mittels der die Plattformeinheit teilweise zur Anlage an den Rahmenteil (15) heranbewegt wird, wodurch eine Winkelbewegung um die Achse des Rohrteils (41) verhinderbar ist.

10. Vorrichtung nach Ansprüchen 8 und 9, dadurch gekennzeichnet, daß zwischen der Plattformeinheit (59) und dem Schwenkhebel (55) ein Kugellager (83, 85) vorgesehen ist.

11. Vorrichtung nach Ansprüchen 6 bis 10, dadurch gekennzeichnet, daß die Plattformeinheit einen Bodenteil (61) und Seitenteile (63) enthält, zwischen denen der Wandlerkopf (13) einspannbar ist.

12. Vorrichtung nach Ansprüchen 2 und 3 und einem oder mehreren der Ansprüche 1 und 4 bis 10, dadurch gekennzeichnet, daß die Lagervorrichtung für den Schwenkhebel ein Kugellager (83, 85) am freien Auflageende umfaßt und die Einstelleinrichtung zur Abstandsänderung zwischen Schwenkhebel (55) und Rahmenteil (15) durch wenigstens eine Schraube (95) gebildet wird, die das freie Ende der Lagervorrichtung (81) mit dem Rahmenteil (15) verbindet.

13. Vorrichtung nach Ansprüchen 1 bis 12, dadurch gekennzeichnet, daß die Plattformeinheit (59) aus folgenden Teilen besteht:

0003339

dem Bodenteil (61), den Seitenteilen (63) und den Ausrichteinrichtungen, die aus dem Ausrichtstab (72) und einem Rohrteil (41) zur Führung desselben gebildet sind, sowie Federelemente (69) zwischen der Plattformeinheit (59) und Rahmenteil (15).

14. Vorrichtung nach Ansprüchen 1 bis 5 und 12, dadurch gekennzeichnet, daß die Lagervorrichtung aus einem Paar Lagerblöcken (81) mit jeweils einem befestigten und einem freien Ende besteht und Federelementen (87), die den Schwenkhebel mit den freien Enden der Lagerblöcke (81) verbinden und daß Einstelleinrichtungen (95) für die freien Enden beider Lagerblöcke (81) relativ zum Rahmenteil (15) vorgesehen sind.

Zeichn.

0003339

*Fig.1*

0003339

Fig.2

Fig.3

Fig. 4

Fig. 5

0003339

| | |
|---|---|
| **Europäisches Patentamt** | **Nummer der Anmeldung** |
| **EUROPÄISCHER RECHERCHENBERICHT** | EP 79 10 0169 |

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | G 11 B 21/08// G 11 B 5/55 H 04 N 5/78 |
| | <u>FR - A - 787 490</u> (VON MIHALY)<br>* Seite 3, Zeilen 10-44; Seite 4, Zeilen 45-65; Figuren 1,2 *<br><br>--- | 1,4-6, 8 | |
| | <u>US - A - 3 839 737</u> (VOGEL)<br>* Spalte 2, Zeilen 36-52; Spalte 3, Zeilen 18-26; Spalte 4, Zeilen 26-49; Figuren 1-3 *<br><br>--- | 2,3,6-9 | |
| | <u>DE - A - 1 487 180</u> (SAWAZAKI)<br>* Seite 3, Zeile 24 bis Seite 4, Zeile 22; Figuren 1,2,4,5 *<br><br>--- | 2,6,7,9 | RECHERCHIERTE SACHGEBIETE (int. Cl.²)<br><br>G 11 B 5<br>G 11 B 15<br>G 11 B 7<br>G 11 B 21 |
| | <u>US - A - 3 624 309</u> (DATTILO)<br>* Spalte 2, Zeilen 51-60; Spalte 3, Zeilen 4-8; Figuren 1-3 *<br><br>--- | 11 | |
| | <u>FR - A - 2 353 923</u> (MOTOROLA)<br>* Seite 3, Zeilen 5-30; Seite 4, Zeilen 25-36; Seite 7, Zeilen 2-14; Figuren 1,2 *<br><br>--- | 2-4 | |
| A | <u>US - A - 2 997 547</u> (BEACHELL)<br>* Spalte 3, Zeilen 20-60; Figuren 2-4 *<br><br>----- | 2,3, 11,12 | KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 25-04-1979 | FUX |

EPA form 1503.1   06.78